# EUROPÄISCHE PATENTSCHRIFT

(11) **EP 1 442 916 B1**
(45) Veröffentlichungstag und Bekanntmachung des Hinweises auf die Patenterteilung: **19.04.2006**
(21) Anmeldenummer: 03027893.1
(22) Anmeldetag: 05.12.2003
(51) Int. Cl.: B60K 31/00, G08G 1/16, B60K 26/02, B60W 10/18, B60W 10/04

(54) **Verfahren und Vorrichtung zum Steuern eines Fahrzeugs**
Method and device for controlling a vehicle
Procédé et dispositif de commande d'un véhicule

(30) Priorität: 28.01.2003 DE 10304181
(43) Veröffentlichungstag der Anmeldung: 04.08.2004
(73) Patentinhaber: Valeo Schalter und Sensoren GmbH, 74321 Bietigheim-Bissingen (DE)
(72) Erfinder: Gotzig, Heinrich, Dr., 74081 Heilbronn (DE); Hoffsommer, Klaus, 74321 Bietigheim-Bissingen (DE); Heimberger, Markus, 71732 Tamm (DE)
(74) Vertreter: Dreiss, Fuhlendorf, Steimle & Becker

(56) Entgegenhaltungen:
- EP-A- 0 962 351
- DE-A- 19 620 929
- FR-A- 2 796 601
- US-A- 4 969 103
- PATENT ABSTRACTS OF JAPAN vol. 009, no. 111 (M-379), 15. Mai 1985 (1985-05-15) & JP 59 231157 A (NIPPON DENSO KK), 25. Dezember 1984 (1984-12-25)

## Beschreibung

Die Erfindung betrifft ein Verfahren zum Steuern eines Fahrzeugs, insbesondere eines Kraftfahrzeugs, bei welchem eine Messung des Abstandes des Fahrzeugs zu einem Hindernis, insbesondere zu einem vorausfahrenden Fahrzeug zu verschiedenen Zeitpunkten erfolgt, mit den Merkmalen des Oberbegriffs des Anspruchs 1.

Derartige Verfahren und Vorrichtungen sind im Stand der Technik zum Beispiel in Form eines Tempomaten bekannt. Ein Tempomat ist jedoch üblicherweise nur dafür ausgelegt, die Abstände eines Fahrzeugs zu einem vorausfahrenden Fahrzeug bei höheren Geschwindigkeiten zu ermitteln und diese höheren Geschwindigkeiten gegebenenfalls zu verändern. Er ist üblicherweise jedoch nicht dafür ausgelegt, eine Veränderung der Geschwindigkeit bei niedrigen Geschwindigkeiten und bei nur geringen Abständen durchzuführen. Die Abstandsmessung erfolgt bei ihm in der Regel mit Hilfe von Radarstrahlen; dies ist ein Grund dafür, warum er relativ teuer ist.

Im Bereich niedrigerer Geschwindigkeiten und Abstände sind zur Zeit insbesondere Einparkhilfesysteme bekannt. Sie umfassen üblicherweise Abstandssensoren, welche sich zum Beispiel in den Stoßfängern des Fahrzeugs befinden und den Abstand des Fahrzeugs zu einem Hindernis und insbesondere auch zu vorausfahrenden Fahrzeugen mit Hilfe von Ultraschall messen. Sie melden dem Fahrer akustisch und/oder optisch, wenn er sich dem Hindernis gefährlich nähert.

Bei den bisher bekannten Einparkhilfen ist kein aktiver Eingriff in das Fahrverhalten des Fahrzeugs vorgesehen. Insbesondere bieten sie zur Zeit keine Möglichkeit, ein Absenken der Geschwindigkeit des Fahrzeugs vorzunehmen, um eine Kollision des Fahrzeugs mit dem Hindernis zu vermeiden.

Die den nächstkommenden Stand der Technik bildende FR 2 796 601 offenbart ein Verfahren zur Verringerung der Kraftstoffmenge eines Fahrzeugs, wenn die Geschwindigkeit des Fahrzeugs größer ist, als eine vorgegebene Steuergeschwindigkeit ist. Wird die Geschwindigkeit nicht auf die gewünschte Geschwindigkeit verringert, dann werden die Bremsen aktiviert. Die Steuergeschwindigkeit wird ermittelt, nachdem man ein Hindernis und den Abstand zu diesem ermittelt hat.

Ausgehend von diesem Stand der Technik ist es deshalb die Aufgabe der vorliegenden Erfindung, ein Verfahren zum Steuern eines Fahrzeugs sowie ein Computerprogramm derart weiterzubilden, dass insbesondere eine Vermeidung von einer Kollision des Fahrzeugs mit dem Hindernis möglich wird.

Diese Aufgabe wird durch das in Patentanspruch 1 beanspruchte Verfahren und das im Anspruch 6 angegebene Computerprogramm gelöst.

Demnach erfolgt die Lösung bei dem eingangs genannten Verfahren insbesondere dadurch, dass in den Fällen beziehungsweise Gefahrensituationen, in denen die Geschwindigkeit des Fahrzeugs kleiner als die Schrittgeschwindigkeit und/oder der Abstand des Fahrzeugs zu dem Hindernis einen vorbestimmbaren Abstandsschwellenwert unterschreitet, eine Veränderung der Geschwindigkeit des Fahrzeugs und/oder eine Ausgabe eines Hinweises an den Fahrer nach Maßgabe durch die Größe des ermittelten Abstandes erfolgt.

Erfindungsgemäß wird die beanspruchte Veränderung der Geschwindigkeit des Fahrzeugs gemäß Schritt b) nur für eine bestimmte Zeitdauer durchgeführt, wenn der Wunsch des Fahrers nach einer Änderung der Geschwindigkeit seines Fahrzeugs der im Rahmen des erfindungsgemäßen Verfahrens vorgenommenen Änderung der Geschwindigkeit erkennbar entgegensteht. Auf diese Weise behält der Fahrer die letztendliche Entscheidungsbefugnis über das Fahrverhalten des Fahrzeugs. Bei einer erfindungsgemäß vorgenommenen Reduzierung der Geschwindigkeit erhält der Fahrer, wie gesagt in jedem Fall eine vergrößerte Reaktionszeit, als gegenüber der Situation, wenn diese Verringerung der Geschwindigkeit nicht vorgenommen werden würde. Im Einzelfall kann jedoch diese Reaktionszeit für den Fahrer zu kurz sein, um einen Aufprall des Fahrzeugs zu verhindern.

Vorteilhafterweise können auf diese Weise Kollisionen des Fahrzeugs mit dem Hindernis vermieden werden, wenn bei einer festgestellten Verringerung des Abstandes auch eine Verringerung der Geschwindigkeit des Fahrzeugs erfolgt. Durch die Verringerung der Geschwindigkeit des Fahrzeugs erhält der Fahrer mehr Zeit, die aktuelle Fahrsituation zu erfassen und selber zu reagieren. Eine geeignete Reaktion kann zum Beispiel in der rechtzeitigen Einleitung einer Vollbremsung liegen. Ein weiterer Vorteil dieses beanspruchten Verfahrens besteht bei sich vergrößerndem Abstand darin, dass eine gefahrlose automatische Erhöhung der Geschwindigkeit des Fahrzeugs möglich ist, so lange bis ein vorgebbarer Abstand erreicht ist. Auf diese Weise wird insbesondere bei Anfahrsituationen wie zum Beispiel an Ampeln oder in Staus ein zügiges Aufschließen von hinterherfahrenden an vorausfahrende Fahrzeuge gewährleistet.

Durch die Beschränkung des Verfahrens auf kleine Geschwindigkeiten und kleine Abstände des Fahrzeugs zu dem Hindernis wird das Verfahren besonders attraktiv für eine Realisierung durch bekannte Einparkhilfesysteme, die dann für die Durchführung dieses Verfahrens lediglich vorzugsweise einer zusätzlichen Software bedürfen. Eine Änderung der Hardware des Einparkhilfesystems ist in der Regel nicht erforderlich.

Vorteilhafte Ausführungsbeispiele des Verfahrens und des Computerprogramms sind, insbesondere um den Fahrer bei Vorliegen einer Gefahrensituation zu warnen, Gegenstand der Unteransprüche.

Die Erfindung wird nachfolgend in Form von Ausführungsbeispielen unter Bezugnahme auf die beigefügten Figuren detailliert beschrieben, wobei
- Figur 1: das Verfahren gemäß der Erfindung; und
- Figur 2: eine Vorrichtung zum Steuern eines Fahrzeugs gemäß der Erfindung
zeigt.

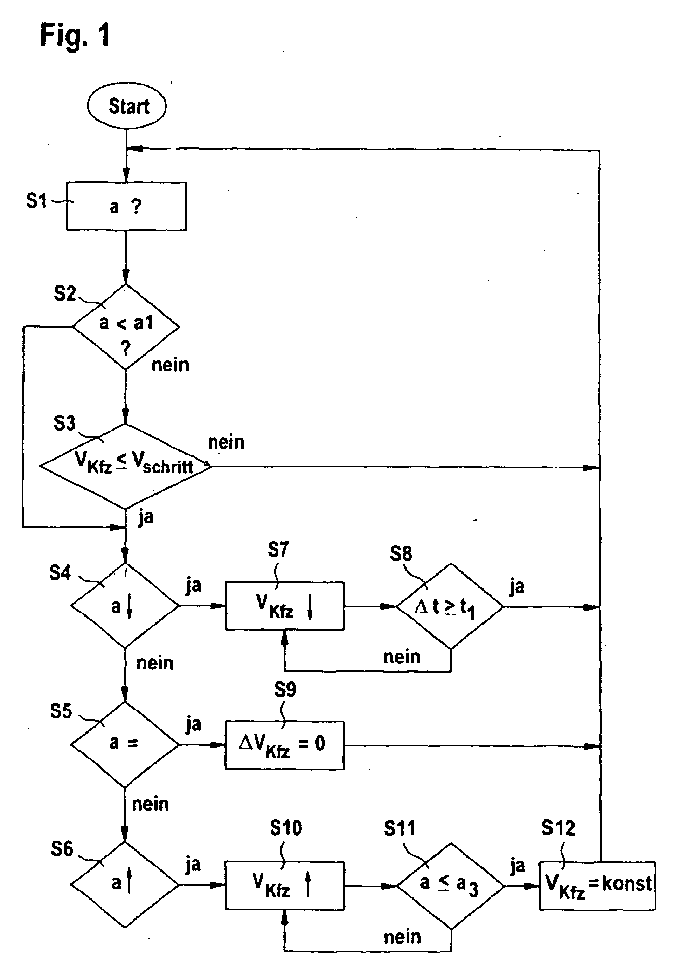

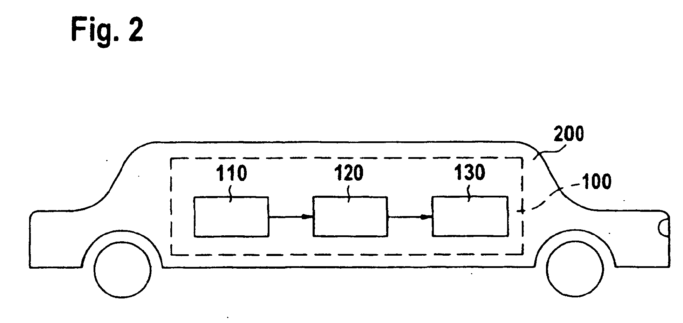

Gemäß Figur 1 sieht das erfindungsgemäße Verfahren zum Steuern eines Fahrzeugs 200 zunächst vor, dass der Abstand dieses Fahrzeugs 200 zu einem Hindernis, insbesondere zu einem vorausfahrenden Fahrzeug (hier nicht gezeigt) ermittelt wird. Dies geschieht vorzugsweise mit Hilfe einer Abstandssensoreinrichtung 110, wie in Figur 2 gezeigt. Diese erzeugt ein Sensorsignal, welches den gemessenen Abstand repräsentiert.

Gemäß Figur 1 erfolgt in einem nachfolgenden Verfahrensschritt S2 eine Überprüfung des ermittelten Abstandes a dahingehend, ob dieser Abstand einen ersten vorgebbaren Abstandsschwellenwert al unterschreitet. Wenn dies nicht der Fall ist, wird in einem nachfolgenden Verfahrensschritt S3 geprüft, ob die Geschwindigkeit des Fahrzeugs 200 V_{Kfz} kleiner oder gleich einer vorgebbaren Schrittgeschwindigkeit V_{Schritt} ist; diese liegt typischerweise unter 10 km/h. Sollte dieses Kriterium ebenfalls nicht erfüllt sein, so sieht das Verfahren vor, dass ein Rücksprung zu dem eben beschriebenen Verfahrensschritt S1 erfolgt, bei dem dann erneut der Abstand des Fahrzeugs zu dem Hindernis ermittelt wird.

Sollte jedoch das Kriterium gemäß Verfahrensschritt S3 oder gemäß Verfahrensschritt S2 erfüllt sein, so sieht das erfindungsgemäße Verfahren vor, in den Schritten S4 - S6 die zeitliche Veränderung des Abstandes zwischen dem Fahrzeug 200 und dem Hindernis zu überprüfen.

Sollte gemäß Verfahrensschritt S4 festgestellt werden, dass sich der Abstand zwischen dem Fahrzeug 200 und dem Hindernis zunehmend verringert und sollte dieser Abstand a sogar einen vorgebbaren zweiten Abstandsschwellenwert a2 unterschreiten, so sieht das erfindungsgemäße Verfahren einen Eingriff in die Steuerung der Geschwindigkeit des Fahrzeugs 200 dahingehend vor, dass die Geschwindigkeit des Fahrzeugs V_{Kfz} gemäß Verfahrensschritt S7 verringert wird. Vorzugsweise wird diesem durch das erfindungsgemäße Verfahren vorgesehenen Eingriff in die Geschwindigkeit des Fahrzeugs Priorität zugewiesen gegenüber der von dem Fahrer gewünschten Geschwindigkeit. Diese Priorität gegenüber dem Fahrerwunsch wird jedoch gemäß Verfahrensschritt S8 lediglich für eine vorbestimmte Zeitdauer t1 gewährt. Sollte nach Ablauf dieser Zeitdauer t1 der Wunsch des Fahrers nach einer bestimmten Geschwindigkeit oder nach einer Änderung der Geschwindigkeit, welche von der durch das erfindungsgemäße Verfahren vorgesehenen Geschwindigkeit abweicht, erkennbar sein, so wird dem Fahrerwunsch insofern Priorität eingeräumt, als dass er auch dann realisiert wird, wenn das erfindungsgemäße Verfahren aufgrund der analysierten aktuellen Fahrsituation, das heißt insbesondere aufgrund des ermittelten Abstandes und der ermittelten Fahrzeuggeschwindigkeit, eine gegenüber dem Fahrerwunsch abweichende Beeinflussung der Geschwindigkeit vorgeschlagen werden würde. Nach Ablauf der Zeitdauer t1 ist dann das erfindungsgemäße Verfahren wahlweise gänzlich beendet oder es erfolgt, wie in Figur 1 dargestellt, ein Rücksprung zu dem Verfahrensschritt S1.

Wenn in Verfahrensschritt S4 keine zunehmende Verringerung des Abstandes a, sondern eine zeitliche Konstanz des Abstandes a festgestellt wird, dann erfolgt gemäß den Verfahrensschritten S5 und S9 auch keine Veränderung der Geschwindigkeit des Fahrzeugs 200. In diesem Fall springt das Verfahren zu dem Verfahrensschritt S1 zurück, wonach zunächst der aktuelle Abstand a des Fahrzeugs 200 zu dem Hindernis erneut ermittelt wird.

Sollte jedoch auch die Prüfung in Verfahrensschritt S5 insofern negativ verlaufen, als dass der Abstand zeitlich nicht konstant ist, so bleibt aufgrund der vorherigen Prüfung gemäß Verfahrensschritt S4 nur die Feststellung in Verfahrensschritt S6 übrig, dass sich der Abstand zwischen dem Fahrzeug und dem Hindernis zunehmend vergrößert. Für diesen Fall sieht Verfahrensschritt S10 vor, die Geschwindigkeit des Fahrzeugs V_{Kfz} so lange gemäß Verfahrensschritt S11 zu vergrößern, bis sich der Abstand auf einen vorgebbaren Abstandsschwellenwert a₃ eingependelt hat. Wenn dieser gewünschte Abstand a₃ erreicht ist, wird die Geschwindigkeit V_{Kfz} vorzugsweise nicht weiter erhöht, sondern sie wird vielmehr gemäß Verfahrensschritt S12 konstant gehalten, um auf diese Weise auch den Abstand zwischen dem Fahrzeug 200 und dem Hindernis konstant zu halten. Auch diese konstant gehaltene Geschwindigkeit ist jedoch nicht zwangsläufig ein Dauerzustand, sondern muss vielmehr immer wieder überprüft und gegebenenfalls auf eine neue veränderte Fahrsituation angepasst werden. Zu diesem Zweck ist in Figur 1 vorgesehen, dass auch von Verfahrensschritt S12 aus wiederum ein Rücksprung zu dem Verfahrensschritt S1 erfolgt.

Figur 2 zeigt eine Vorrichtung 100 zum Steuern eines Fahrzeugs 200 gemäß dem erfindungsgemäßen Verfahren. Diese Vorrichtung umfasst die Abstandssensoreinrichtung 110 zum Erfassen des Abstandes des Fahrzeugs zu dem Hindernis und zum Erzeugen eines entsprechenden Sensorsignals insbesondere gemäß Verfahrensschritt S1. Weiterhin umfasst die Vorrichtung 100 eine Steuereinrichtung 120 zum Verändern der Geschwindigkeit des Fahrzeugs 200 im Ansprechen auf das von der Abstandssensoreinrichtung 110 erzeugte Sensorsignal gemäß den Verfahrensschritten S7 - S12. Die Veränderung der Geschwindigkeit des Fahrzeugs 200 erfolgt erfindungsgemäß durch Ansteuern einer Vorrichtung 130 zur Beeinflussung der Geschwindigkeit des Fahrzeugs, bei welcher es sich zum Beispiel um das Gaspedal oder die Motorsteuerung des Fahrzeugs handeln kann.

Die Steuereinrichtung 120 ist so ausgebildet, dass sie die Ansteuerung der Vorrichtung 130 gemäß dem erfindungsgemäßen Verfahren nur dann vornimmt, wenn zumindest eines der beiden Kriterien gemäß Verfahrensschritt S2 oder Verfahrensschritt S3 erfüllt ist.

Besonders vorteilhaft ist die Verwendung einer heute bereits bekannten und in vielen PKWs eingebauten Einparkhilfe-Einrichtung, zum Beispiel auf Ultraschallbasis, als Abstandssensoreinrichtung 110. Die erfindungsgemäße Steuereinrichtung 120 lässt sich dann sehr einfach in Form eines Computerprogramms realisieren, welches dann die von der Einparkhilfe-Einrichtung 110 erfassten Abstandssignale auswertet und in für die Vorrichtung 130 zur Beeinflussung der Geschwindigkeit des Fahrzeugs geeignete Steuerbefehle umsetzt.

Neben der bereits angesprochenen Möglichkeit der Realisierung der Steuereinrichtung 120 in Form eines Computerprogramms besteht auch die Möglichkeit, sie in Form einer Hardwareschaltung oder in einer Kombination aus Computerprogramm und Hardwareschaltung zu realisieren. Unabhängig von der Art ihrer Realisierung muss die Steuereinrichtung 120 in jedem Falle so ausgebildet sein, dass sie in der Lage ist, die Vorrichtung 130 gemäß allen Varianten des erfindungsgemäßen Verfahrens anzusteuern.

Im Falle einer zumindest teilweisen Realisierung des Steuergerätes in Form eines Computerprogrammes kann dieses zum Beispiel mit weiteren Computerprogrammen zur Steuerung des Fahrzeugs auf einem computerlesbaren Datenträger abgespeichert sein. Bei dem Datenträger kann es sich um eine Diskette, eine Compact-Disk (sogenannte CD), einen sogenannten Flash-Memory oder dergleichen handeln. Die auf dem Datenträger abgespeicherte Software kann dann als Produkt an einen Kunden verkauft werden.

Weiterhin ist es im Falle einer Softwarerealisierung möglich, dass das Computerprogramm gegebenenfalls zusammen mit weiteren Computerprogrammen zur Steuerung des Fahrzeugs 200 - ohne die Zuhilfenahme eines elektronischen Speichermediums - über ein elektronisches Kommunikationsnetzwerk - als Produkt an einen Kunden übertragen wird und auf diese Weise verkauft wird. Bei dem Kommunikationsnetzwerk kann es sich insbesondere um das Internet handeln.
Nachfolgend erfolgt die Beschreibung eines Beispiels für einen praxisrelevanten Einsatz des erfindungsgemäßen Verfahrens bei einer alltäglichen Verkehrssituation:
a) Zwei Fahrzeuge A und B stehen hintereinander an einer unübersichtlichen Straßenkreuzung. Fahrzeuge von links haben Vorfahrt. Fahrzeug A steht vor B. Der Abstand zwischen den Fahrzeugen beträgt 1 m.
b) Das Fahrzeug A fährt los, da die Straßenkreuzung vermeintlich frei ist.
c) Fahrzeug B fährt ebenfalls los, da ja Fahrzeug A vorgefahren ist.
d) Fahrzeug A bremst aber kurz nach dem Anfahren wieder ab. Fahrzeug A hat nur eine Strecke von 1 m zurückgelegt; dann beträgt der Abstand zwischen dem ursprünglichen Startpunkt von A und dem neuen Stoppunkt von B 2 m.
e) Der Fahrzeugführer von B sieht das Abbremsen von Fahrzeug A zu spät, da er sich beim Anfahren für 500 ms auf die Situation in der Kreuzung konzentriert hat. Sein Fahrzeug wurde von ihm so stark beschleunigt, dass es (theoretisch) in diesen 500 ms ca. diese 2 m zurücklegen würde.

Der Fahrzeugführer von B sieht das Abbremsen des vorausfahrenden Fahrzeugs A zu spät, weil er sich beim Anfahren für 500 ms auf die Verkehrssituation in der Straßenkreuzung konzentriert hat. Wenn das Fahrzeug nicht mit der erfindungsgemäßen Kollisionswarneinrichtung, das heißt der Vorrichtung 100 zum Steuern des Fahrzeugs 200 ausgerüstet ist, führt eine von dem Fahrzeugführer von B durchgeführte starke Beschleunigung unweigerlich zu einem Auffahrunfall.
Die erfindungsgemäße Vorrichtung 100 zum Steuern des Kraftfahrzeugs ist in der Lage, einem solchen Auffahrunfall präventiv entgegenzuwirken, weil es die drohende Kollisionsgefahr erkennt. Insbesondere bei Ausgestaltung der Abstandssensoreinrichtung 110 in Form einer bekannten Einparkhilfeeinrichtung ist die Vorrichtung in der Lage, Hindernisse im Bereich von einigen Metern zu erkennen. Das erfindungsgemäße Verfahren würde dann in dem beschriebenen Beispielfall einsetzen, weil der gemessene Abstand nach der Beschleunigung in den durch den Schwellenwert a1 begrenzten Nahbereich von einigen Metern fallen würde. Sobald das erfindungsgemäße Verfahren eine derartige Gefahrensituation insbesondere in Form eines Unterschreitens des Abstandes a unter den Schwellenwert a1 festgestellt hat, wird gemäß der Verfahrensschritte S4 und S7 in das Fahrverhalten des Fahrzeugs 200 eingegriffen, indem dessen Geschwindigkeit V_{Kfz} reduziert wird. Alternativ ist es denkbar, dass in dieser Situation ein von dem Fahrer des Fahrzeugs B durch Drücken des Gaspedals geäußerter Beschleunigungswunsch von dem erfindungsgemäßen Verfahren in Kenntnis der Gefahrensituation nur in geringerem Ausmaße, das heißt mit geringerer Beschleunigung, zugelassen wird. Durch diesen Eingriff in das Fahrverhalten des Fahrzeugs und insbesondere in dessen Geschwindigkeit wird die Reaktionszeit, die der Fahrer für eine angemessene Reaktion auf die aktuelle Situation zur Verfügung hat, vergrößert. Im Unterschied zu aus dem Stand der Technik bekannten reinen Abstandswarnsystemen, die keinen Eingriff in die Geschwindigkeitsregelung des Fahrzeugs vorsehen, bedeutet der erfindungsgemäße Eingriff in das Fahrverhalten eine deutliche Verringerung eines Kollisionsrisikos.

Bezogen auf das oben genannte Beispiel und dort insbesondere Schritt e) würde der verbleibende Abstand von 2 m zwischen dem Startpunkt des Fahrzeugs A und dem Stoppunkt des Fahrzeugs B - bei einer gemäß dem erfindungsgemäßen Verfahren durchgeführten verringerten Beschleunigung - nicht schon in 500 ms, sondern beispielsweise erst in 1.000 ms durchfahren werden, falls der Fahrer nicht reagieren würde. Wenn der Fahrer dann jedoch bei der verringerten Beschleunigung nach beispielsweise 500 ms insbesondere aufgrund eines ihm zugeführten Warnhinweises die Gefahrensituation erkennt, kann er eine Vollbremsung einleiten und auf diese Weise einen Unfall noch verhindern. Selbst wenn jedoch der Fahrer B sein Fahrzeug trotz verzögerter Reaktionszeit nicht mehr abbremsen kann, so ist die Aufprallgeschwindigkeit bei dem Unfall kleiner und damit der Unfallschaden geringer.

Wenn die erfindungsgemäße Vorrichtung den Beschleunigungswunsch des Fahrers zwar erkennt, ihn aber nur bedingt zulässt, so wird dies von einem erfahrenen Fahrer, insbesondere, wenn er das Verhalten der erfindungsgemäßen Vorrichtung kennt, erkannt; er kann dann dieses Verhalten seines Fahrzeugs als Warnhinweis interpretieren.

Grundsätzlich ist es natürlich auch möglich, den Eingriff in die Geschwindigkeit des Fahrzeugs so weit vorzunehmen, dass ein Unfall bei Erkennen einer Gefahrensituation im Rahmen der technischen Möglichkeiten auf jeden Fall verhindert werden soll. Dies würde jedoch bedeuten, dass im Zweifelsfalle dem Fahrer jegliche Entscheidungskompetenz über das Fahrverhalten in der kritischen Situation entzogen werden müsste; dies wird bei den geringen Geschwindigkeiten, für die das erfindungsgemäße Verfahren überhaupt nur vorgesehen ist, nicht für notwendig erachtet.

## Patentansprüche

1. Verfahren zum Steuern eines Fahrzeugs, insbesondere eines Kraftfahrzeugs, umfassend folgende Schritte:
- Erfassen des Abstandes des Fahrzeugs zu einem Hindernis zu verschiedenen Zeitpunkten (S1);
- Prüfen, ob die Geschwindigkeit des Fahrzeugs V_{kfz} kleiner als eine vorgebbare Schrittgeschwindigkeit und/oder der Abstand a einen vorbestimmten Abstandsschwellenwert al unterschreitet (S2-S6); und
- Verändern der Geschwindigkeit des Fahrzeugs V_{KFZ} nach Maßgabe durch die Größe des Abstandes und/ oder Ausgeben eines Hinweises an den Fahrer nach Maßgabe durch die Größe des Abstandes (S7-S12), wenn zumindest eines der Prüfkriterien in dem vorangegangenen Prüfschritt bejaht wurde,
**dadurch gekennzeichnet, dass**
die Veränderung der Geschwindigkeit des Fahrzeugs aufgrund dieses Verfahrens nur für eine vorbestimmte Zeitdauer oder eine vorbestimmte Wegstrecke durchgeführt wird, wenn der Wunsch des Fahrers des Fahrzeugs nach einer Änderung der Geschwindigkeit, der Änderung der Geschwindigkeit gemäß diesem Verfahren (S7, S10) erkennbar entgegen steht, um nach Ablauf der Zeitdauer oder nach Passieren der Wegstrecke den Wünschen des Fahrers nicht mehr im Wege zu stehen.

2. Verfahren nach Anspruch 1, **dadurch gekennzeichnet, dass** es sich bei dem Hindernis um ein vorausfahrendes Fahrzeug handelt.

3. Verfahren nach Anspruch 1 oder 2, **dadurch gekennzeichnet, dass** wenn festgestellt wird (S4), dass der Abstand a einen vorgebbaren Schwellenwert a2 unterschreitet und evtl. sogar noch weiter sinkt, die Geschwindigkeit des Fahrzeugs vorzugsweise soweit reduziert wird, dass eine Kollision mit dem Hindernis vermieden wird (S7).

4. Verfahren nach Anspruch 1 oder 2, **dadurch gekennzeichnet, dass** wenn festgestellt wird, dass der Abstand zeitlich konstant bleibt (S5), keine Änderung der Geschwindigkeit des Fahrzeugs erfolgt (S9).

5. Verfahren nach Anspruch 1 oder 2, **dadurch gekennzeichnet, dass** wenn festgestellt wird, dass sich der Abstand mit der Zeit zunehmend vergrößert (S6), die Geschwindigkeit des Fahrzeugs solange erhöht wird, bis ein vorgegebener zweiter Abstand a3 erreicht wird (S10, S11).

6. Computerprogramm für eine Steuereinrichtung zur Ansteuerung einer Vorrichtung zur Beeinflussung der Geschwindigkeit des Fahrzeugs, **gekennzeichnet durch** einen Programmcode, der dazu geeignet ist, das Verfahren nach einem der Ansprüche 1 bis 5 durchzuführen, wenn er auf einem Computer ausgeführt wird.

7. Computerprogramm nach Anspruch 6, **dadurch gekennzeichnet, dass** der Programmcode auf einem computerlesbaren Datenträger gespeichert ist.

## Revendications

1. Procédé de commande d'un véhicule, en particulier d'un véhicule automobile, comprenant les étapes suivantes :
- calcul de la distance du véhicule par rapport à un obstacle à différents moments (S1) ;
- contrôle si la vitesse du véhicule V_{KFZ} est inférieure à une vitesse de mesure pouvant être prédéfinie et/ou si la distance a est inférieure à une valeur de seuil de distance prédéterminée a1 (S2-S6) ; et
- modification de la vitesse du véhicule V_{KFZ} en fonction de la longueur de la distance et/ou émission d'une indication au conducteur en fonction de la longueur de la distance (S7-S12) si au moins l'un des critères de contrôle a reçu une réponse « oui » dans l'étape de contrôle précédente ;
**caractérisé en ce que** la modification de la vitesse du véhicule sur la base de ce procédé est réalisée uniquement pour une durée prédéterminée ou un parcours prédéterminé, lorsqu'il est constaté que la volonté du conducteur du véhicule après une modification de la vitesse s'oppose à la modification de la vitesse selon ce procédé (S7, S10) afin de ne pas gêner la volonté du conducteur après l'écoulement de la durée ou après le passage du parcours.

2. Procédé selon la revendication 1, **caractérisé en ce que** l'obstacle est un véhicule circulant à l'avant.

3. Procédé selon l'une quelconque des revendications 1 ou 2, **caractérisé en ce que**, lorsqu'il est constaté (S4) que la distance a est inférieure à une valeur de seuil pouvant être prédéfinie a2 et, le cas échéant, continue même de diminuer, la vitesse du véhicule est de préférence réduite à un degré approprié pour éviter une collision avec l'obstacle (S7).

4. Procédé selon l'une quelconque des revendications 1 ou 2, **caractérisé en ce que**, lorsqu'il est constaté que la distance reste constante dans le temps (S5), aucune modification de la vitesse du véhicule n'est réalisée (S9).

5. Procédé selon l'une quelconque des revendications 1 ou 2, **caractérisé en ce que**, lorsqu'il est constaté que la distance augmente progressivement au fil du temps (S6), la vitesse du véhicule est augmentée jusqu'à ce qu'une deuxième distance prédéterminée a3 soit atteinte (S10, S11).

6. Programme informatique pour un dispositif de commande destiné à la commande d'un dispositif permettant d'influencer la vitesse du véhicule, **caractérisé par** un code de programme qui est approprié pour mettre en oeuvre le procédé selon l'une quelconque des revendications 1 à 5 lorsqu'il est exécuté sur un ordinateur.

7. Programme informatique selon la revendication 6, **caractérisé en ce que** le code de programme est enregistré sur un support de données, lisible sur ordinateur.

## Claims

1. Method for controlling a vehicle, in particular a motor vehicle, comprising the following steps:
- detecting the distance of the vehicle from an obstacle at various time points (S1);
- checking whether the speed of the vehicle Vᵥₑₕ is less than a presettable step speed and/or the distance a is smaller than a preset threshold distance value a1 (S2-S6); and
- altering the speed of the vehicle Vᵥₑₕ according to the size of the distance and/or the issuing of an indication to the driver according to the size of the distance (S7-S12), if at least one of the test criteria has been answered in the affirmative in the previous test step, **characterised in that** the change in the speed of the vehicle based on this method is carried out only for a preset time period or a preset distance of travel if the wish of the driver of the vehicle for a change in the speed clearly opposes the change in the speed according to this method (S7, S10), in order, after expiry of the time period or after covering the distance of travel, no longer to oppose the wishes of the driver.

2. Method according to claim 1, **characterised in that** the obstacle is a preceding vehicle.

3. Method according to claim 1 or 2, **characterised in that** if it is determined (S4) that the distance a is below a presettable threshold value a2 and possibly falls even further, the speed of the vehicle is preferably reduced far enough so that a collision with the obstacle is avoided (S7).

4. Method according to claim 1 or 2, **characterised in that** if it is determined that the distance remains constant over time (S5), no change in the speed of the vehicle takes place (S9).

5. Method according to claim 1 or 2, **characterised in that** if it is determined that the distance becomes increasingly larger over time (S6), the speed of the vehicle is increased until a predetermined second distance a3 is reached (S10, S11).

6. Computer program for a control apparatus for controlling a device for influencing the speed of the vehicle, **characterised by** a program code which is suitable for carrying out the method according to one of the claims 1 to 5 when it is executed on a computer.

7. Computer program according to claim 6, **characterised in that** the program code is stored on a computer-readable data medium.
